# EUROPEAN PATENT APPLICATION

(11) **EP 2 579 562 A1**
(43) Date of publication of application: **10.04.2013**
(21) Application number: 12177462.4
(22) Date of filing: 23.07.2012
(51) Int. Cl.: H04N 1/00

(54) **Image Forming Apparatus, Image Forming Method and Computer-Readable Recording Medium**

(30) Priority: 06.10.2011 KR 20110102038
(71) Applicant: Samsung Electronics Co., Ltd., Suwon-si, Gyeonggi-do, 443-742 (KR)
(72) Inventor: Kim, Hyeong-ju, Gyeonggi-do (KR)
(74) Representative: Hewett, Jonathan Michael Richard

(57) **Abstract**

An image forming method of an image forming apparatus is provided. The image forming method includes, in response to a document being placed in a scanning unit, detecting a size of the document; comparing the detected size of the document with a size of paper loaded in a tray of the image forming apparatus and determining whether the document is properly printable on the loaded paper; displaying information relating to the printability of the document based on the result of the determining; and printing the document on the loaded paper by scanning the document.

## Description

The present invention relates to an image forming apparatus, an image forming method, and a computer-readable medium, and more particularly, to an image forming apparatus capable of displaying information as to whether a document is properly printable on paper loaded in a tray thereof without any distortion before the printing of the document, an image forming method of the image forming apparatus, and a computer-readable medium.

Image forming apparatuses are devices for printing print data generated by a terminal device such as, for example, a computer, onto recording paper. Examples of the image forming apparatuses include a copier, a printer, a facsimile machine, a multi-function peripheral (MFP) apparatus into which the functions of a copier, a printer, a facsimile machine are incorporated, and the like.

Even though the types of documents and paper sizes supported by image forming apparatuses have diversified, a mismatch between the size of a document to be printed and the size of the paper may often occur. In response to the occurrence of a mismatch between the size of a document to be printed and the size of paper, the document may not be properly printed on the paper.

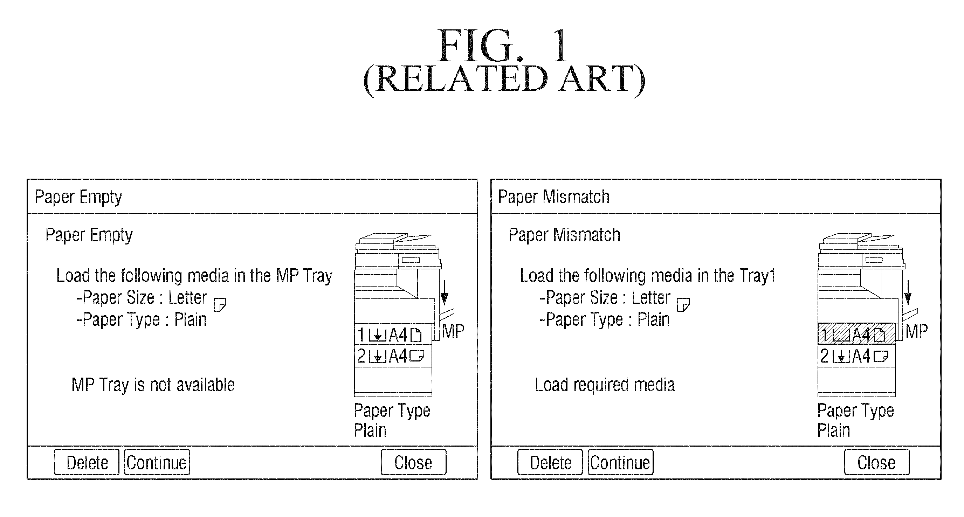

To address this problem, a warning message that reads 'paper mismatch' or 'paper empty' may be displayed on a user interface (UI) screen. This method is further described with reference to FIG. 1.

FIG. 1 is a diagram illustrating examples of UI windows that display 'Paper Mismatch' and 'Paper Empty' messages, respectively. Referring to FIG. 1, when there is no page loaded, a 'Paper Empty' popup window may be displayed, indicating that tray 1 and tray 2 are both empty. When there is paper loaded, but the size of the loaded paper does not match the size of a document to be printed, a 'Paper Mismatch' popup window may be displayed, indicating that A4 paper is loaded in tray 1, but both tray 1 and 2 are empty of Letter-sized paper that fits the size of the document to be printed.

However, a user may not be able to recognize whether a document is properly printable until the printing of the document begins after the conversion of the document into an image through scanning. That is, a user may determine the printability of a document based on a popup window that is displayed only after the beginning of a print job, and may need to cancel the current print job and register a new print job if a determination is made that the current print job is not proceeding properly.

The present invention provides an image forming apparatus capable of displaying information as to whether a document is properly printable on paper loaded in a tray thereof without any distortion before the printing of the document, an image forming method of the image forming apparatus, and a non-transitory computer-readable recording medium.

Additional features and utilities of the present invention will be set forth in part in the description which follows and, in part, will be obvious from the description, or may be learned by practice of the invention.

The foregoing and/or other features and utilities of the present invention may be achieved by providing an image forming method of an image forming apparatus, the image forming method including, in response to a document being placed in a scanning unit, detecting a size of the document; comparing the detected size of the document with a size of paper loaded in a tray of the image forming apparatus and determining whether the document is properly printable on the loaded paper; displaying information relating to the printability of the document based on the result of the determining, and printing the document on the loaded paper by scanning the document.

The detecting may include detecting the size of the document by using at least one detection sensor that is disposed in the scanning unit.

The determining may include, when the detected size of the document is the same as or smaller than the size of the loaded paper, determining that the document is properly printable on the loaded paper; and when the detected size of the document is larger than the size of the loaded paper, determining that the document is not properly printable on the loaded paper.

The printing may include, in a case in which the document is determined to be properly printable on the loaded paper, printing the document on the loaded paper by scanning the document.

The image forming apparatus may also include receiving a print option setting that may be applied to the printing, wherein the determining includes determining whether the document is properly printable on the loaded paper based on the detected size of the document, the size of the loaded paper, and the received print option setting.

The displaying may include displaying various colours as the information relating to the printability of the document according to the result of the determining.

The displaying may include displaying a user interface (UI) window including a first area through which to receive the print option setting and a second area which displays the information relating to the printability of the document.

The determining may include, in response to a print option setting being received via the first area, determining whether the document is properly printable on the loaded paper based on the detected size of the document, the size of the loaded paper, and the received print option setting.

The information relating to the printability of the document may be updated in the second area in real time in response to the receipt of a print option setting via the first area.

The displaying may include displaying a UI window including a third area in which an image corresponding to the detected size of the document is displayed and a fourth area in which an image corresponding to the size of the loaded paper is displayed.

The foregoing and/or other features and utilities of the present invention may also be achieved by providing an image forming apparatus, the image forming apparatus including, a detection unit which detects a size of a document in response to the document being placed in a scanning unit, a determination unit which compares the detected size of the document with a size of paper loaded in a tray of the image forming apparatus and determines whether the document is properly printable on the loaded paper, a user interface (UI) unit which displays information relating to the printability of the document based on the result of the determination performed by the determination unit, a scanning unit which scans the document, and an image forming unit which prints the scanned document according to the printability.

The detection unit may detect the size of the document by using at least one detection sensor that is disposed in the scanning unit.

The determination unit may determine that the document is properly printable on the loaded paper if the detected size of the document is the same as or smaller than the size of the loaded paper, and may determine that the document is not properly printable on the loaded paper if the detected size of the document is larger than the size of the loaded paper.

When the document is determined to be properly printable on the loaded paper, the image forming unit may print the scanned document.

When a print option setting that can be applied to the printing is received, the determination unit may determine whether the document is properly printable on the loaded paper based on the detected size of the document, the size of the loaded paper, and the received print option setting.

The UI unit may display various colours in accordance with the information relating to the printability of the document according to the result of the determining.

The UI unit may display a UI window including a first area through which to receive the print option setting and a second area which displays the information relating to the printability of the document.

If a print option setting is received via the first area, the determination unit may determine whether the document is properly printable on the loaded paper based on the detected size of the document, the size of the loaded paper, and the received print option setting.

The information relating to the printability of the document may be updated in the second area in real time in response to the receipt of a print option setting via the first area.

The UI unit may display a UI window including a third area in which an image corresponding to the detected size of the document is displayed and a fourth area in which an image corresponding to the size of the loaded paper is displayed.

The foregoing and/or other features and utilities of the present invention may also be achieved by providing a computer-readable medium having recorded thereon program code for executing an image forming method of an image forming apparatus, the image forming method including: in response to a document being placed in a scanning unit, detecting a size of the document; comparing the detected size of the document with a size of paper loaded in a tray of the image forming apparatus and determining whether the document is properly printable on the loaded paper; displaying information relating to the printability of the document based on the result of the determining; and printing the document on the loaded paper by scanning the document.

The foregoing and/or other features and utilities of the present invention may also be achieved by providing an image forming method of an image forming apparatus, the image forming method including, determining, by the image forming apparatus, when, based on a size of a document, the document is properly printable using a size of paper loaded in a tray of the image forming apparatus, displaying, by the image forming apparatus, whether the document is properly printable; and scanning, automatically, the document on the loaded paper if the document is properly printable, and, when the document is not properly printable, upon an input of revised user instructions to the image forming apparatus, implementing printing in accordance with the revised user instructions.

The size of the document may be determined by using at least one detection sensor that is disposed in the image forming apparatus.

The foregoing and/or other features and utilities of the present invention may also be achieved by providing an image forming apparatus including, a printing analysis unit for determining and displaying whether a document to be scanned is a properly printable document, and a scanning unit which scans the document when the document to be scanned is a properly printable document.

The printing analysis unit may include, a detection unit which detects a size of a document in response to the document being placed in a scanning unit, a determination unit which compares the detected size of the document with a size of paper loaded in a tray of the image forming apparatus and determines whether the document is properly printable on the loaded paper, a user interface unit which displays information relating to the printability of the document based on the result of the determination performed by the determination unit; and at least one control unit which controls at least one of the detection unit, the determination unit, the user interface unit, and the scanning unit.

The image forming apparatus may also include an image forming unit which prints the scanned document, wherein the image forming unit is controlled by the at least one control unit.

These and/or other features and utilities of the present invention will become apparent and more readily appreciated from the following description of the embodiments, taken in conjunction with the accompanying drawings of which:
FIG. 1 is a diagram illustrating a related-art user interface (UI) window;
FIG. 2 is a block diagram illustrating an image forming apparatus according to an exemplary embodiment of the present invention;
FIG. 3 is a diagram illustrating a UI window according to an exemplary embodiment of the present invention;
FIGS. 4 and 5 are diagrams illustrating UI windows according to an exemplary embodiment of the present invention;
FIGS. 6 and 7 are diagrams illustrating UI windows according to an exemplary embodiment of the present invention;
FIG. 8 is a flowchart illustrating an image forming method of an image forming apparatus, according to an exemplary embodiment; and
FIG. 9 is a flowchart illustrating an image forming method of an image forming apparatus, according to an exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures.

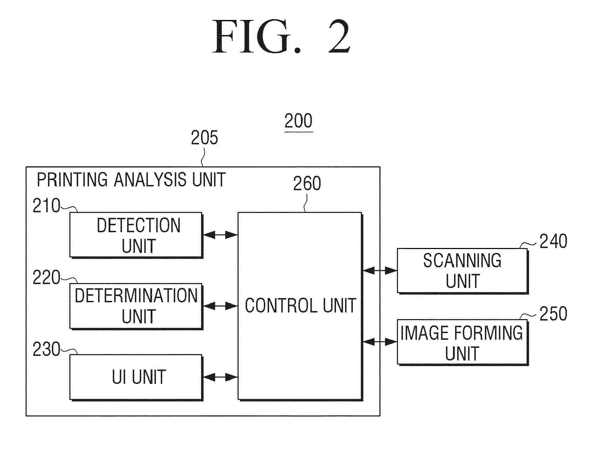

FIG. 2 is a diagram illustrating an image forming apparatus according to an exemplary embodiment. Referring to FIG. 2, image forming apparatus 200 includes a detection unit 210, a determination unit 220, a user interface (UI) unit 230, a scanning unit 240, an image forming unit 250, and a control unit 260. The detection unit 210, the determination unit 220, the user interface (UI) unit 230, and the control unit 260 may form a printing analysis unit 205. Control of the detection unit 210, the determination unit 220, the user interface unit 230, the scanning unit 240, and the image forming unit 250 may be distributed to more than one controller, if necessary. Hence, although the control unit 260 represents at least one control element, control unit 260 also represents utilizing a plurality of control elements.

The detection unit 210 may detect the size of a target document. For example, in response to the target document being placed in the scanning unit 240, the detection unit 210 may detect the size of the target document (for example, whether the target document is A4-, A3-, or Letter-sized) without a requirement of the receipt of a command to perform a particular job (for example, a copy command) from a user.

The detection unit 210 may include one or more detection sensors that may be disposed in the scanning unit 240. For example, in a case in which the scanning unit 240 is of a flatbed type, the detection unit 210 may detect the size of the target document with the use of the detection sensors in the scanning unit 240 in response to the target document being placed in the scanning unit 240.

In an example, in a case in which the scanning unit 240 is an automatic document feeder (ADF), the detection unit 210 may detect the size of the target document using one or more detection sensors that may be disposed in the ADF in response to the target document being placed in the ADF.

The determination unit 220 may compare the detected document size with the size of paper loaded in a tray (not shown) of the image forming apparatus 200, and may determine whether the target document is properly printable on the loaded paper based on the result of the comparison.

When the detected document size is the same as or smaller than the size of the loaded paper, the determination unit 220 may determine that the target document is properly printable on the loaded paper. For example, when the detected document size is A₄, and A4 paper is loaded in the tray of the image forming apparatus 200, the determination unit 220 may determine that the target document is properly printable on the loaded paper because it is likely that the target document will be printed as a whole on the loaded paper without an error. Alternatively, in a case in which the detected document size is A4, and A3 paper is loaded in the tray of the image forming apparatus 200, the determination unit 220 may determine that, even though the size of the target document does not match the size of the loaded paper, the target document is properly printable on the loaded paper because it is likely that the target document will be printed as a whole on the loaded paper.

When the detected document size is larger than the size of the loaded paper, the determination unit 220 may determine that the target document is not properly printable on the loaded paper. For example, in a case in which the detected document size is A3 and A4 paper is loaded in the tray of the image forming apparatus 200, the determination unit 220 may determine that the target document is not properly printable on the loaded paper because it is likely that the target document will fail to be printed as a whole on the loaded paper.

In response to the receipt of print options that may be applied to the printing of the target document, the determination unit 220 may determine the printability of the target document based on the detected document size, the size of the loaded paper, and the print options.

For example, the print options may include at least one of a 'Reduce/Enlarge' option and a 'Rotate' option. In this example, in a case in which the detected document size is A4, the size of the loaded paper is A3, and there is a print option set by the user to scale up from A4 to A3, the determination unit 220 may determine that the target document is properly printable on the loaded paper.

When the loaded paper is replaced with new paper whose size is the same as or larger than the detected document size, the determination unit 220 may determine that the target document is properly printable on the new paper.

When the detected document size is A4 and is smaller than the size of the loaded paper, i.e., A3, the determination unit 220 may determine that the target document is not properly printable on the loaded paper in consideration of the fact that the target document may leave too much space when printed on the loaded paper.

The UI unit 230 may allow the user to set or select a variety of functions that may be supported by the image forming apparatus 200.

The UI unit 230 may display information relating to the printability of the target document on the loaded paper based on the result of the determination performed by the determination unit 220 by using a UI window. For example, if the result of the determination performed by the determination unit 220 indicates that the target document is properly printable on the loaded paper, the UI unit 230 may display information indicating that the target document is properly printable in the UI window. Alternatively, if the result of the determination performed by the determination unit 220 indicates that the target document is not properly printable on the loaded paper, the UI unit 230 may display information indicating that the target document is not properly printable in the UI window. Alternatively, in a case in which the target document is not placed in the scanning unit 240, the UI unit 230 may display information indicating that there is no document ready in the scanning unit 240. The UI unit 230 may provide a second area in which information relating to the printability of the target document is displayed.

For example, the information relating to the printability of the target document may be displayed in the second area by using text (for example, "Not printable," "No paper in scanning unit," "Printable," or the like), various indicators (for example, an `X' mark for a case when the target document is not properly printable on the loaded paper, a triangular mark for a case in which there is no paper in the scanning unit 240, and an 'O' mark for a case in which the target document is properly printable on the loaded paper), or various colours (for example, blue for a case in which the target document is properly printable on the loaded paper, red for a case when the target document is not properly printable on the loaded paper, and white for a case in which there is no paper in the scanning unit 240). However, there is no restriction to the manner in which the information relating to the printability of the target document is displayed in the second area.

The information relating to the printability of the target document may be displayed in real time in the second area. That is, in response to the result of the determination performed by the determination unit 220 indicating that the target document has become properly printable as a result of, for example, a print option setting change or the replacement of the loaded paper with new paper, information indicating that the target document is properly printable may be displayed in real time in the second area, replacing existing information indicating that the target document is not properly printable.

The UI unit 230 may also provide a first area through which to receive print option settings. In a case in which, as a result of the receipt of print option settings via the first area, the target document has become properly printable on the loaded paper, the determination unit 220 may display information indicating that the target document is properly printable in real time in the second area.

The UI unit 230 may also provide a third area in which an image corresponding to the detected document size is displayed and a fourth area in which an image corresponding to the size of the loaded paper is displayed. For example, in response to the second area being selected by the user, the UI unit 230 may display one or more trays (for example, tray 1 and tray 2) of the image forming apparatus 200. In this example, in response to one of the trays being selected by the user, the UI unit 230 may display an image corresponding to the detected document size in the third area and an image corresponding to the size of the loaded paper in the fourth area. Alternatively, the UI unit 230 may provide a UI window in which the third and fourth areas are provided along with the first and second areas without a requirement of the selection of the second area. For example, a UI window that may be provided by the UI unit 230 may be a popup window.

The UI unit 230 may be implemented as a device capable of realizing both an input function and an output function such as, for example, a touch pad or the like, or as the combination of an input device such as, for example, a mouse, a keyboard, or the like, and a display device such as, for example, a cathode-ray tube (CRT) monitor, a liquid crystal display (LCD) monitor, a light-emitting diode (LED) display, or the like.

The scanning unit 240 may read the target document. For example, the scanning unit 240 may include a lens unit (not shown) that forms image light at an image sensor included therein based on light reflected from the target document, and may obtain image data corresponding to the target document based on the image light.

In this example, the image sensor may be implemented as a complementary metal-oxide-semiconductor (CMOS) image sensor or a charge-coupled device (CCD).

The image forming unit 250 may form an image to be printed on paper. For example, the image forming apparatus 250 may print print data generated by a terminal device such as a computer or print data read by the scanning unit 240.

The control unit 260 may control the detection unit 210, the determination unit 220, the UI unit 230, the scanning unit 240, and the image forming unit 250.

In response to the detection of the size of the target document by the detection unit 210, the control unit 260 may control the determination unit 220 to determine whether the target document is properly printable on the loaded paper.

The control unit 260 may control the UI unit 230 to display information relating to the printability of the target document on the loaded paper based on the result of the determination unit 220.

The control unit 260 may control the UI unit 230 to change information indicating the state of the target document in real time in response to the target document being switched from an unprintable state to a printable state or vice versa in real time.

In response to the receipt of a command (for example, a copy command) to perform a particular job from the user, the control unit 260 may control the scanning unit 240 to read the target document, and may control the image forming unit 250 to form an image corresponding to the target document on paper. Alternatively, the control unit 260 may control image data obtained by scanning the target document on paper only when the target document is determined to be properly printable on the loaded paper.

According to the above-mentioned exemplary embodiments, it is possible to improve user convenience by notifying the user in advance whether a target document is properly printable on paper loaded in the tray of an image forming apparatus with the use of a UI unit of the image forming apparatus.

In addition, it is possible to prevent waste of paper and toner and any unnecessary operation such as canceling a print job by leading the user to appropriately set one or more print options and load appropriate paper for a target document before the performing of the print job.

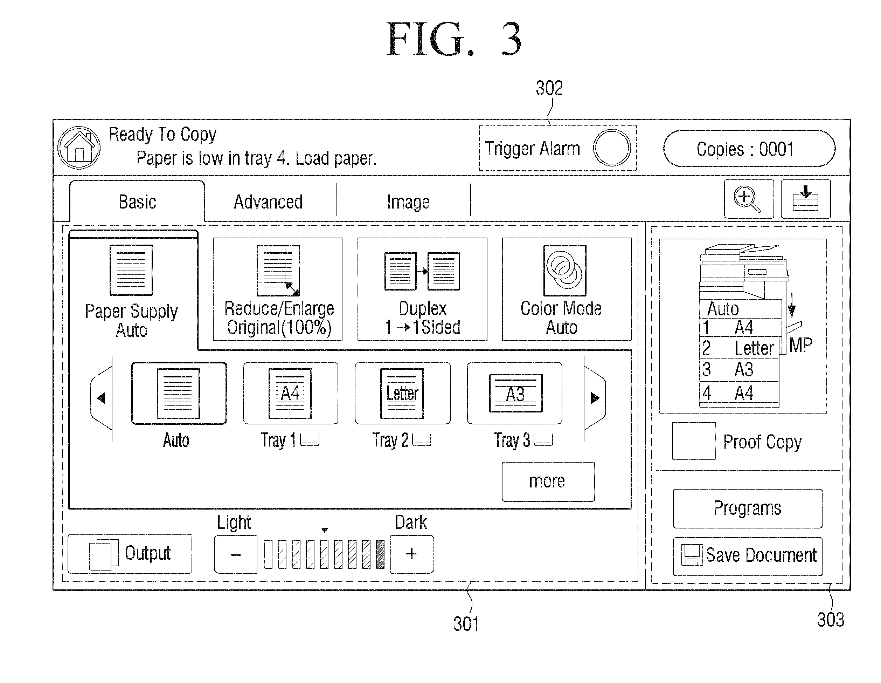

FIG. 3 is a diagram illustrating a UI window according to an exemplary embodiment. Referring to FIG. 3, the UI window includes a first area 301 through which to receive print option settings, a second area 302 which displays information relating to the printability of a target document on paper loaded in a tray of the image forming apparatus 200, and a third area 303 which displays the size of the loaded paper. The second area 302 may include a trigger alarm that may be displayed in various colours. For example, the trigger alarm of the second area 302 may be displayed in white in a case in which the target document is properly printable on the loaded paper. Accordingly, the user may easily recognize the printability of the target document on the loaded paper from the second area 302, and may readily perform any necessary operation.

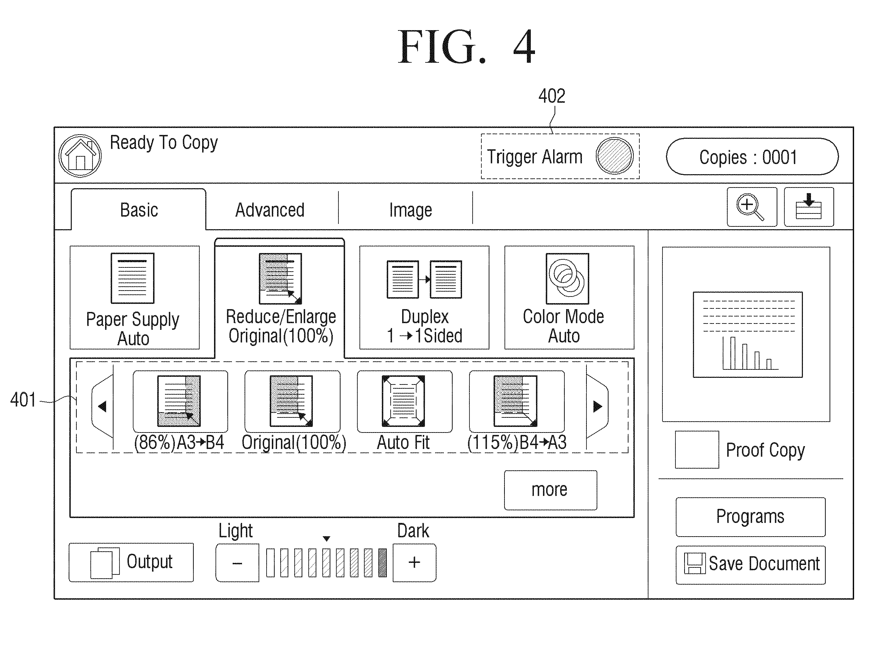

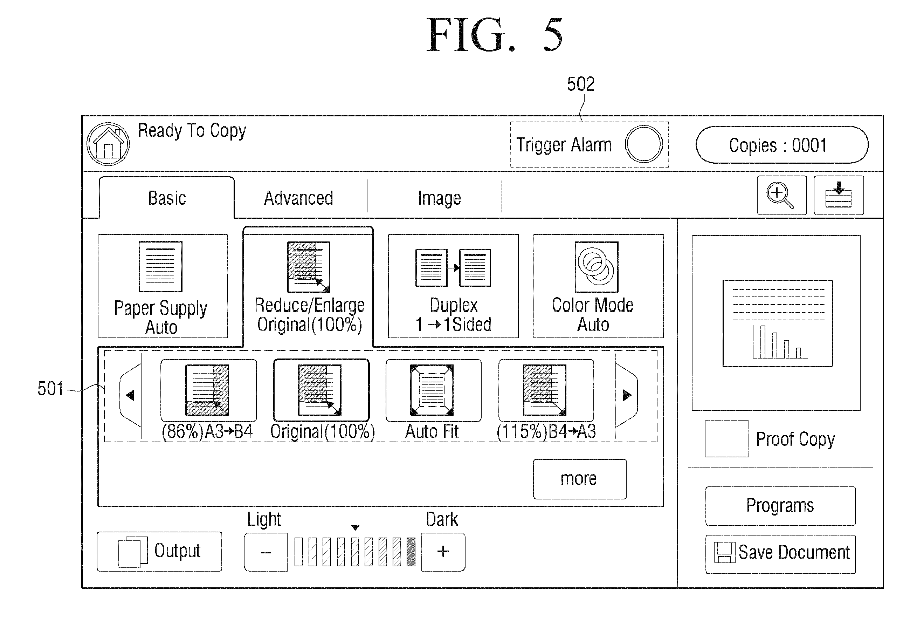

FIGS. 4 and 5 are diagrams illustrating UI windows according to other exemplary embodiment. Referring to FIG. 4, a UI window includes a first area 401 through which to receive print option settings and a second area 402 which displays information relating to the printability of a target document on paper loaded in a tray of the image forming apparatus 200. For example, the second area 402 may include a trigger alarm that may be displayed in black in a case in which the target document is not properly printable on the loaded paper. Accordingly, the user may easily recognize the printability of the target document on the loaded paper from the second area 402 and may perform any necessary operation such as, for example, resetting print options or loading new paper whose size fits the target document.

FIG. 5 is a diagram illustrating a UI window according to another exemplary embodiment. Referring to FIG. 5, the user may select a 'Reduce/Enlarge' option from a first area 501, and may set the 'Reduce/Enlarge' option so that a target document may become properly printable on paper loaded in a tray of the image forming apparatus 200. In response to the target document becoming properly printable on the loaded paper, a change may be made to a trigger alarm of a second area 502 in real time to indicate the printability of the target document on the loaded paper. For example, in a case in which the target document is A4-sized and the loaded paper is A3-sized, the user may set the Reduce/Enlarge' option to scale up from A4 to A3. In this example, the determination unit 220 may determine that the target document is properly printable on the loaded paper, and may notify the user of the printability of the target document on the loaded paper in real time by making a change to the second area 502 as shown in FIG. 5.

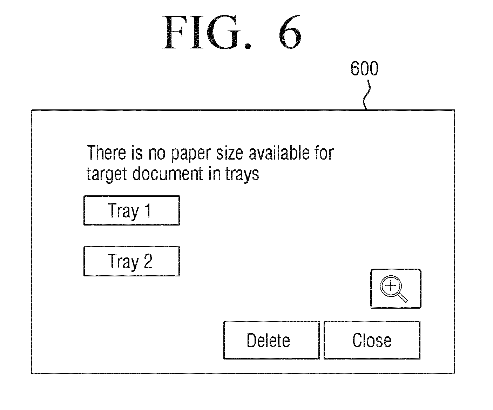

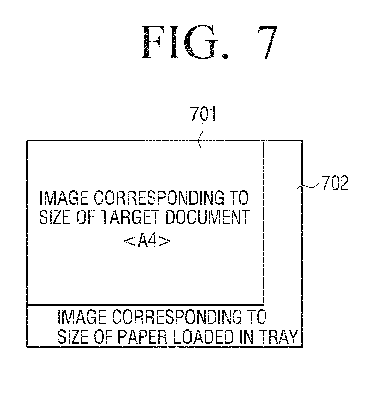

FIGS. 6 and 7 are diagrams illustrating UI windows according to an exemplary embodiments. Referring to FIG. 6, a UI window 600 may display the types of trays that the image forming apparatus 200 are equipped with and various areas for making selections. For example, in response to the second area being selected by the user, the UI unit 230 may display the types of the trays of the image forming apparatus 200 (for example, tray 1 and tray 2). In this example, in a case in which one of the trays is selected by the user, the UI unit 230 may display an image corresponding to a detected size of a target document in the third area and an image corresponding to the size of paper loaded in the selected tray in the fourth area.

That is, referring to FIG. 7, in response to the selection of the second area by the user, the UI unit 230 may display a UI window including a third area 701 in which the image corresponding to the detected size of the target document is displayed and a fourth area 702 in which the image corresponding to the size of the paper loaded in the selected tray is displayed. Accordingly, the user may easily recognize how the target document would be printed on the paper loaded in the selected tray.

Alternatively, the UI unit 230 may display a UI window in which the third and fourth areas are provided along with the first and second areas without a requirement of the selection of the second area. For example, a UI window that may be displayed by the UI unit 230 may be a popup window.

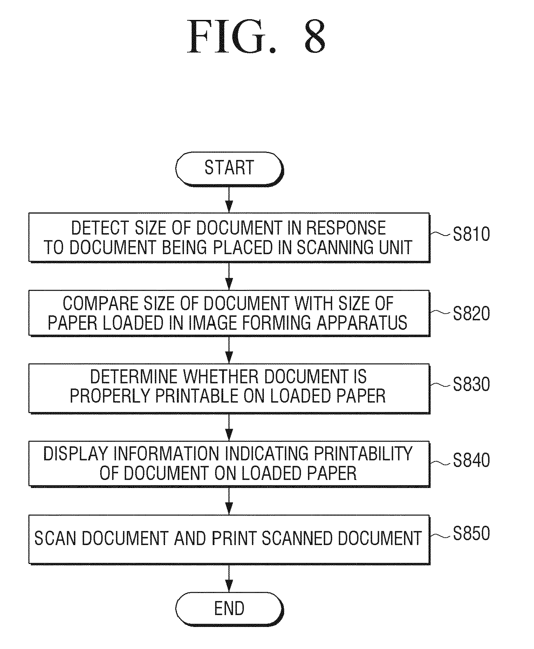

FIG. 8 is a flowchart illustrating an image forming method of an image forming apparatus, according to an exemplary embodiment.

Referring to FIG. 8, in operation S810, in response to a target document being placed in a scanning unit of an image forming apparatus, the size of the target document may be detected. In operation S820, the detected document size may be compared with the size of paper loaded in a tray of the image forming apparatus. In operation S830, a determination may be made as to whether the target document is properly printable on the loaded paper based on the result of the comparison. In operation S840, information on the printability of the target document on the loaded paper may be displayed based on the result of the determination. In operation S850, in a case in which a copy job needs to be performed, the target document may be scanned, and the scanned document may be printed on the loaded paper.

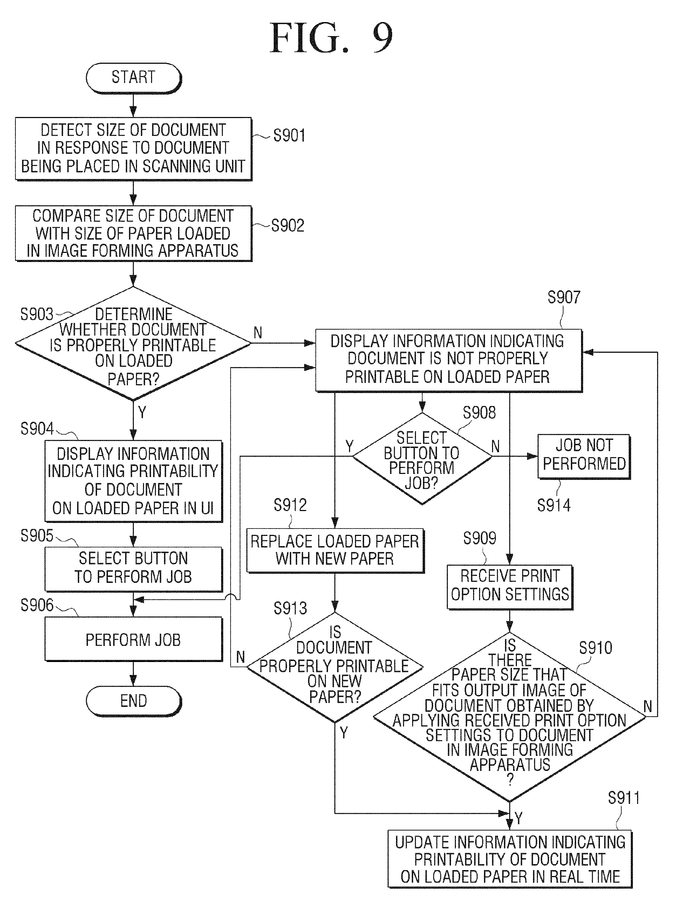

FIG. 9 is a flowchart illustrating an image forming method of an image forming apparatus, according to another exemplary embodiment. Referring to FIG. 9, in operation S901, in response to a target document being placed in a scanning unit of an image forming apparatus, the size of the target document may be detected. For example, the scanning unit is an automatic document feeder (ADF). In operation S902, the detected document size may be compared with the size of paper loaded in a tray of the image forming apparatus. In accordance with the "Y" result of operation S903, when a determination is made that the target document is properly printable on the loaded paper, in operation S904, information indicating that the target document is properly printable may be displayed in a UI window. In operation S905, a button for performing a particular job may be selected, and in operation S906, the particular job may be performed.

In accordance with the "N" result of operation S903, when a determination is made that the target document is not properly printable on the loaded paper, in operation S907, information indicating that the target document is not properly printable may be displayed in the UI window. In operation S908, a determination is made if the button for performing the particular job is selected, and, in operation S906, the particular job may be performed even though the target document is determined not to be properly printable on the loaded paper. Alternatively, in a case in which the target document is determined not to be properly printable on the loaded paper and the button for performing the particular job is not selected, in operation S914, the particular job may not be performed.

In operation S909, if one or more print option settings are received when the information indicating that the target document is not properly printable may be displayed in the UI window, in operation S910, a determination may be made as to whether there is a paper size that fits an output image of the target document obtained by applying the received print option settings to the target document in the image forming apparatus. In accordance with the "Y" result of operation S910, when a determination is made that there is paper that fits the output image of the target document in the image forming apparatus, in operation S911, information indicating that the target document is properly printable may be displayed in real time in the UI window, replacing the existing information indicating that the target document is not properly printable. Alternatively, in accordance with the "N" result of operation S910, when a determination is made that there is no paper that fits the output image of the target document in the image forming apparatus, the method returns to operation S907.

In operation S912, if the loaded paper is replaced with new paper when the information indicating that the target document is not properly printable may be displayed in the UI window, in operation S913, a determination may be made as to whether the target document is properly printable on the new paper. In accordance with the "Y" result of operation S913, when a determination is made that the target document is properly printable on the new paper, in operation S911, information indicating that the target document is properly printable may be displayed in real time in the UI window, replacing the existing information indicating that the target document is not properly printable. Alternatively, in accordance with the "N" result of operation S913, when a determination is made that the target document is not properly printable on the new paper, the method returns to operation S907.

In the examples illustrated in FIGS. 8 and 9, a determination unit of an image forming apparatus may determine whether a target document is properly printable on paper loaded in the image forming apparatus. In another non-limiting example, a control unit of the image forming apparatus may determine whether a target document is properly printable on the paper loaded in the image forming apparatus.

In the examples illustrated in FIGS. 8 and 9, information relating to the printability of a target document may be displayed by a UI unit of an image forming apparatus. In another non-limiting example, an additional LED unit may be provided in an image forming apparatus to emit different colours of light according to whether a target document is properly printable on paper loaded in the image forming apparatus.

A computer program may be installed in a device having a computer-readable recording medium connected thereto or installed therein such that the examples illustrated in FIGS. 8 and 9 may be executed.

According to the above-mentioned exemplary embodiments, it is possible to improve user convenience by notifying a user in advance whether a target document is properly printable on paper loaded in a tray of an image forming apparatus.

In addition, it is possible to prevent waste of paper and toner and any unnecessary operation such as canceling a job by leading the user to appropriately set one or more print options and load appropriate paper for a target document to be printed before the performing of the job.

The processes, functions, methods, and/or software described herein may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or may be of a kind well-known and available to those having skill in the computer software arts. Examples of non-transitory computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and computer-readable codes or program instructions may be stored and executed in a decentralized manner.

Although a few embodiments of the present invention have been shown and described, it will be appreciated by those skilled in the art that changes may be made in these embodiments without departing from the invention, the scope of which is defined in the appended claims.

## Claims

1. An image forming method of an image forming apparatus, the image forming method comprising:
in response to a document being placed in a scanning unit, detecting a size of the document;
comparing the detected size of the document with a size of paper loaded in a tray of the image forming apparatus and determining whether the document is properly printable on the loaded paper;
displaying information relating to the printability of the document based on the result of the determining; and
printing the document on the loaded paper by scanning the document.

2. The image forming method of claim 1, wherein the detecting comprises detecting the size of the document by using at least one detection sensor that is disposed in the scanning unit.

3. The image forming method of claim 1 or claim 2, wherein the determining comprises:
if the detected size of the document is the same as or smaller than the size of the loaded paper, determining that the document is properly printable on the loaded paper; and
if the detected size of the document is larger than the size of the loaded paper, determining that the document is not properly printable on the loaded paper.

4. The image forming method of any one of the preceding claims, wherein the printing comprises, in a case in which the document is determined to be properly printable on the loaded paper, printing the document on the loaded paper by scanning the document.

5. The image forming method of any one of the preceding claims, wherein the displaying comprises displaying various colours as the information relating to the printability of the document according to the result of the determining.

6. The image forming method of any one of the preceding claims, further comprising:
receiving a print option setting applicable to the printing,
wherein the determining comprises determining whether the document is properly printable on the loaded paper based on the detected size of the document, the size of the loaded paper, and the received print option setting.

7. The image forming method of claim 6, wherein the displaying comprises displaying a user interface (UI) window including a first area through which to receive the print option setting and a second area which displays the information relating to the printability of the document.

8. The image forming method of claim 7, wherein the determining comprises, in response to a print option setting being received via the first area, determining whether the document is properly printable on the loaded paper based on the detected size of the document, the size of the loaded paper, and the received print option setting.

9. The image forming method of claim 8, wherein the information relating to the printability of the document is updated in the second area in real time in response to the receipt of a print option setting via the first area.

10. The image forming method of any one of the preceding claims, wherein the displaying comprises displaying a UI window including a third area in which an image corresponding to the detected size of the document is displayed and a fourth area in which an image corresponding to the size of the loaded paper is displayed.

11. An image forming apparatus comprising:
a detection unit which detects a size of a document in response to the document being placed in a scanning unit;
a determination unit which compares the detected size of the document with a size of paper loaded in a tray of the image forming apparatus and determines whether the document is properly printable on the loaded paper;
a user interface (UI) unit which displays information relating to the printability of the document based on the result of the determination performed by the determination unit;
a scanning unit which scans the document; and
an image forming unit which prints the scanned document.

12. The image forming apparatus of claim 11, wherein the determination unit determines that the document is properly printable on the loaded paper if the detected size of the document is the same as or smaller than the size of the loaded paper, and determines that the document is not properly printable on the loaded paper if the detected size of the document is larger than the size of the loaded paper.

13. The image forming apparatus of claim 11, wherein, if a print option setting that can be applied to the printing is received, the determination unit determines whether the document is properly printable on the loaded paper based on the detected size of the document, the size of the loaded paper, and the received print option setting.

14. The image forming apparatus of claim 13, wherein the UI unit displays a UI window including a first area through which to receive the print option setting and a second area which displays the information relating to the printability of the document.

15. The image forming apparatus of claim 14, wherein, if a print option setting is received via the first area, the UI unit displays information indicating whether the document is properly printable on the loaded paper based on the detected size of the document, the size of the loaded paper, and the received print option setting.
